# EUROPEAN PATENT APPLICATION

(11) **EP 4 564 622 A1**
(43) Date of publication of application: **04.06.2025**
(21) Application number: 23846101.6
(22) Date of filing: 26.06.2023
(51) Int. Cl.: H02G 1/12, H02G 1/14

(54) **DEVICE AND METHOD FOR PROCESSING ELECTRIC WIRE TERMINAL**

(30) Priority: 27.07.2022 JP 2022119625
(71) Applicant: Yazaki Corporation, Tokyo 108-0075 (JP)
(72) Inventor: TSUKIJI, Nobuto, Makinohara-shi, Shizuoka 421-0407 (JP); IWASAKI, Takahiro, Makinohara-shi, Shizuoka 421-0407 (JP)
(74) Representative: Hoffmann Eitle
(86) International application number: PCT/JP2023/023683
(87) International publication number: WO 2024/024367

(57) **Abstract**

A movable plate (20) is provided to push a remaining part (2a) of a metal foil at a base end of an exposed pair of wire cores (3). The movable plate (20) is rotatable around the axis of an electric wire W, and brings two semicircular recesses (22) formed on the opposing edges into close contact with the outer periphery of the pair of wire cores (3), when a pair of opening and closing plates (21, 21) are closed. The movable plate (20) is slid (as shown by arrow S 1) by a sliding mechanism while remaining in a closed state to push the remaining part (2a) of the metal foil to the base end side of the electric wire W.

## Description

### TECHNICAL FIELD

The present invention relates to, for example, a device for processing an electric wire terminal and a method for processing an electric wire terminal used in terminal processing of high-speed communication cables and the like.

### BACKGROUND ART

As a high-speed communication cable, there is an electromagnetic shield type electric wire in which a pair of wire cores made of a conductor covered with an insulator are arranged, surrounded by metal foil (shielding material) such as aluminum or copper, and covered with a sheath on the outside. In addition, there are also cases where a braid (additional shielding material) is further placed between the metal foil and the sheath. There are also a type with two wire cores arranged in parallel (parallel core type) and a type with two wire cores twisted (twisted core type).

When performing terminal processing of an electric wire having this type of metal foil as a shielding material, the sheath at the end of the electric wire is removed, the metal foil is cut off, the wire core is exposed, and then the terminal is crimped onto the conductor of the wire core. When there is a braid, the braid is exposed by removing the sheath, the exposed braid is folded back onto the sheath and placed over the end of the sheath, and an earth terminal is crimped onto the part over which the braid is placed. In some cases, a metal sleeve is fitted around the outer periphery of the sheath at the position where the braid is placed.

By the way, it is desired to automate some or all of the terminal processing of such electric wires. As an example of automating the removal of metal foil, for instance, the technology described in Patent Literature 1 is known. According to the technology described in Patent Literature 1, the metal foil is cut off by applying a cutting blade to the exposed metal foil after removing the sheath.

### CITATION LIST

### PATENT LITERATURE

Patent Literature 1: JP5247404B

### SUMMARY OF INVENTION

### TECHNICAL PROBLEM

However, when automatically cutting the metal foil, there is a possibility that a remaining part of the metal foil may occur on the base end side of the exposed wire core. When terminal processing such as terminal crimping is performed in a state where there is a remaining part, short circuits may occur, leading to defective products.

Therefore, a method can be considered in which no remaining parts occur and it is confirmed whether the metal foil has been completely removed using a camera over the entire circumferential direction of the electric wire. However, in that case, it is necessary to prepare a camera that can identify at least the remaining metal foil on the electric wire, which incurs costs, and there is a problem that it takes time to process the image to determine the presence or absence of the remaining part of a metal foil.

The present invention has been made in view of the above circumstances, and a purpose of the present invention is to provide a device for processing an electric wire terminal and a method for processing an electric wire terminal that can improve processing quality by eliminating the influence of the remaining part of a metal foil.

### SOLUTION TO PROBLEM

In order to achieve the above-described purpose, a device for processing an electric wire terminal and a method for processing an electric wire terminal according to the present invention are characterized by the following.
(1) A device for processing an electric wire terminal in which in terminal processing of an end portion of an electric wire having a pair of wire cores of which peripheries are surrounded by a metal foil and a sheath covering an outside the metal foil, in a terminal processing portion of the electric wire in which the sheath at the end portion of the electric wire is removed, the metal foil is removed, and the pair of wire cores are exposed, the device processes a remaining part of the metal foil at a base end of the exposed wire cores, the device including:
   a movable plate that includes a pair of opening and closing plates and is rotatable around an axis of the electric wire, the opening and closing plates having two semicircular recesses each corresponding to an outer peripheral contour of each half circumference of the exposed pair of wire cores, arranged adjacent to each other in a direction orthogonal to the axial direction of the electric wire, on opposite edges and being freely openable and closable in an opening direction in which the opening and closing plates are separated from each other and a closing direction in which the opening and closing plates are close to each other;
   an opening and closing mechanism that drives the pair of opening and closing plates of the movable plate to open and close;
   a rotation mechanism that rotates the movable plate around the axis of the electric wire and positions the movable plate in a rotational direction; and
   a sliding mechanism that pushes the remaining part of the metal foil to the base end side of the electric wire, by sliding the movable plate relatively in a base end direction of the electric wire, in a state where the pair of opening and closing plates are closed.
(2) A method for processing electric wire terminal, including: a step of, from the electric wire having a pair of wire cores of which a periphery is covered with a metal foil and a sheath, removing the sheath and the metal foil at an end portion of the electric wire;
   a step of closing a pair of opening and closing plates having two semicircular recesses each corresponding to an outer peripheral contour of each half circumference of the exposed pair of wire cores on opposite edges and being freely openable and closable in an opening direction in which the opening and closing plates are separated from each other and a closing direction in which the opening and closing plates are close to each other, at a position of the exposed pair of wire cores, in a state positioned in a rotational direction; and
   a step of pushing a remaining part of the metal foil to the base end side of the electric wire, by sliding the pair of opening and closing plates relatively in a base end direction of the electric wire, in a state where the pair of opening and closing plates are closed.

### ADVANTAGEOUS EFFECTS OF INVENTION

According to the present invention, even when the remaining part of the metal foil occurs on the base end side of the exposed wire cores, the remaining part can be pushed to the base end side of the electric wire by the sliding operation after closing the movable plate. Therefore, it is possible to eliminate the adverse effects caused by the remaining part of the metal foil and improve the terminal processing quality. In addition, it can contribute to the automation of terminal processing.

As described above, the present invention has been briefly described. Furthermore, by thoroughly reading the embodiments (hereinafter referred to as "embodiments") for implementing the invention described below with reference to the accompanying drawings, the details of the present invention will be further clarified.

### BRIEF DESCRIPTION OF DRAWINGS

Fig. 1 is a perspective view of an electric wire for illustrating a process by a device for processing an electric wire terminal according to an embodiment of the present invention.
Fig. 2 is a schematic view of the device for processing an electric wire terminal according to the embodiment of the present invention as seen from above.
Fig. 3 is a schematic view of the device for processing an electric wire terminal according to the embodiment of the present invention as seen from the side.
Fig. 4 is a schematic view of the device for processing an electric wire terminal according to the embodiment of the present invention as seen from the front.
Fig. 5 is a front view showing a state before closing a movable plate of the device for processing an electric wire terminal according to the embodiment of the present invention.
Fig. 6 is a front view showing a state after closing the movable plate of the device for processing an electric wire terminal according to the embodiment of the present invention.
Fig. 7 is a side view showing a state after closing the movable plate of the device for processing an electric wire terminal according to the embodiment of the present invention.
Fig. 8 is a side view showing a state when the movable plate of the device for processing an electric wire terminal according to the embodiment of the present invention is slid.
Fig. 9 is a side view of a device for processing an electric wire terminal according to another embodiment of the present invention.
Fig. 10 is a front view of a device for processing an electric wire terminal according to yet another embodiment of the present invention.
Fig. 11 is a front view showing a state in the middle of closing the movable plate of the device for processing an electric wire terminal shown in Fig. 10.
Fig. 12 is a front view showing a state when the movable plate of the device for processing an electric wire terminal shown in Fig. 10 is rotated by a predetermined angle.
Fig. 13 is a front view for illustrating the shape characteristic points of the movable plate of the device for processing an electric wire terminal shown in Fig. 10.

### DESCRIPTION OF EMBODIMENTS

The specific embodiments of the present invention will be described below with reference to the drawings.

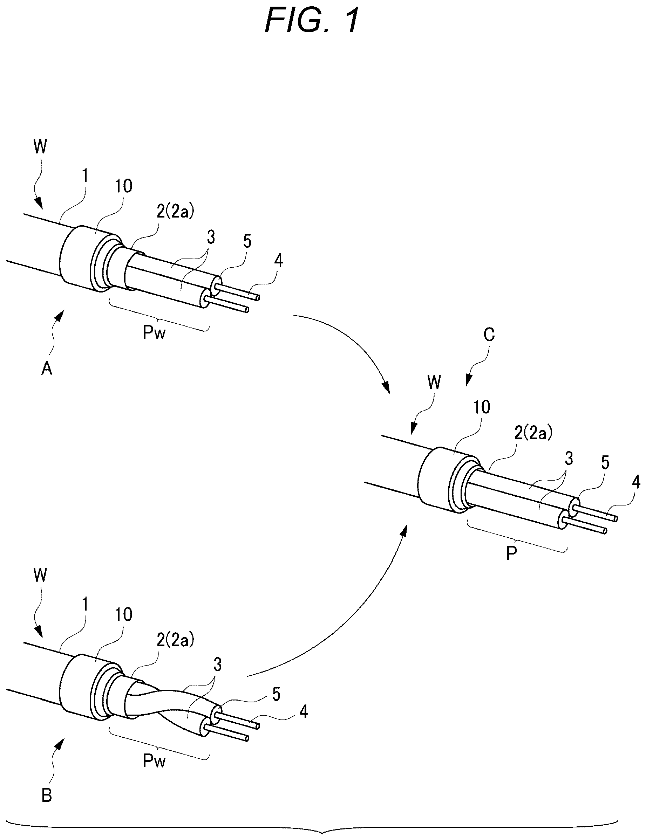

Fig. 1 is a perspective view of an electric wire for illustrating a process by a device for processing an electric wire terminal according to an embodiment of the present invention.

The device for processing an electric wire terminal in this embodiment is, as an example, intended to process an electric wire W as shown in the upper and lower parts on the left side of Fig. 1. In this electric wire W, the periphery of a pair of (two) wire cores 3 is surrounded by a metal foil 2 such as aluminum or copper, and the outside is covered with a sheath 1 of an insulating material. Each wire core 3 is made of a conductor 4 surrounded by an insulator 5, and the metal foil 2 covers the periphery of the pair of wire cores 3, 3. The top left part shows an electric wire A of the parallel core type in which two wire cores 3 extend parallel to each other, and the bottom left part shows a wire B of the twisted core type in which two wire cores 3 are twisted together. The device for processing a terminal of the present embodiment is intended to process the electric wire W of both types: the parallel core type and the twisted core type. In addition, the device for processing an electric wire terminal of the present embodiment is intended to process electric wires with a structure in which a braid is further disposed between the metal foil 2 and the sheath 1, as described later.

In the device for processing a terminal of this embodiment, in terminal processing of an end portion of such an electric wire W, the device processes a remaining part 2a of the metal foil 2 at a base end of the exposed wire cores 3, in a terminal processing portion Pw of the electric wire in which the sheath 1 and metal foil 2 at the end portion of the electric wire W are removed and the pair of wire cores are exposed. In many cases, before processing with this device for processing a terminal, a metal cylindrical sleeve 10 is crimped onto the outer periphery of the end portion of the sheath 1.

The device for processing a terminal of the present embodiment performs a process of pushing the remaining part 2a of the metal foil 2 at the terminal processing portion Pw of the electric wire to the base end side of the electric wire W (the side with the sleeve 10) as shown in C in the right part of Fig. 1.

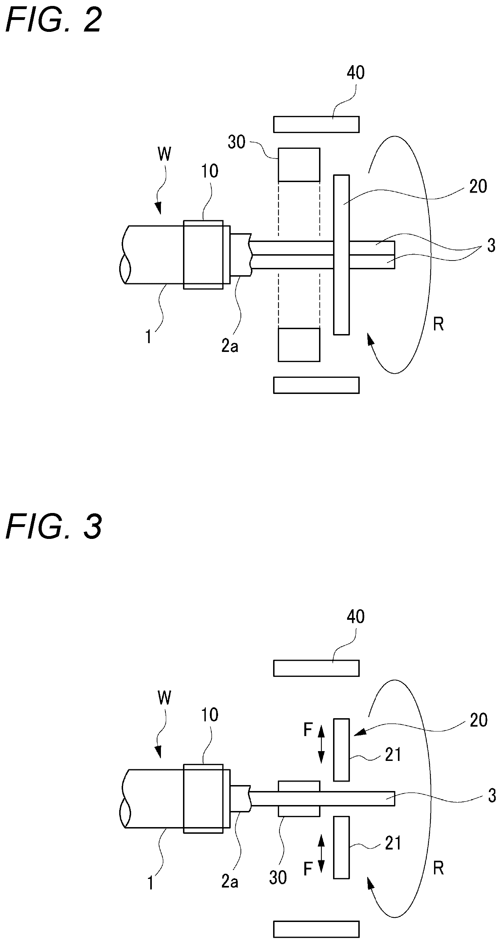

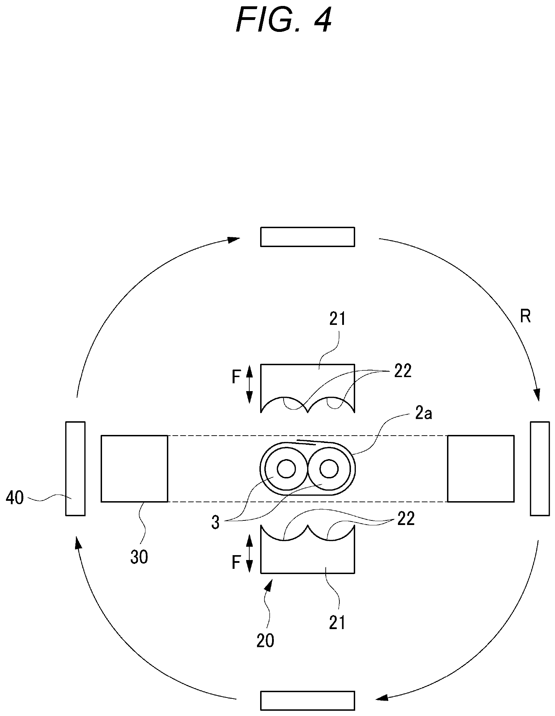

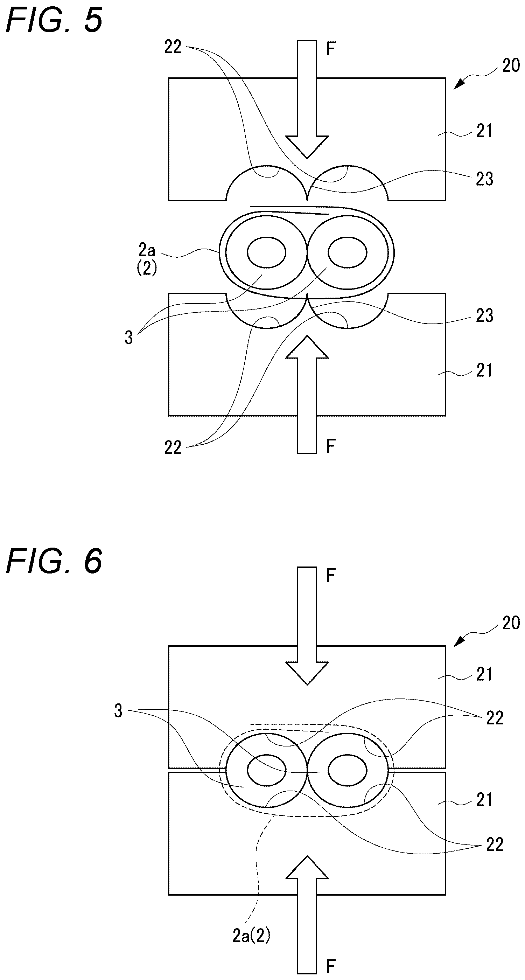

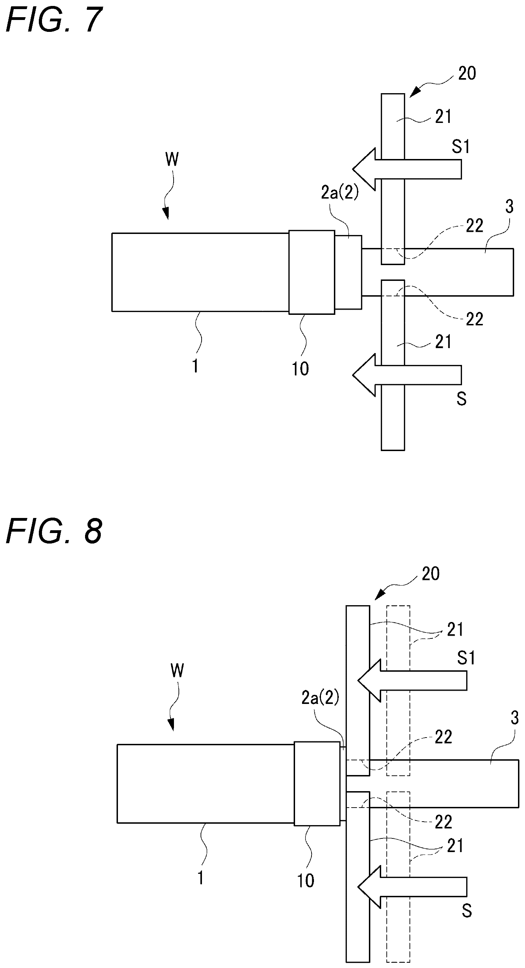

Fig. 2 is a schematic view of the device for processing an electric wire terminal of the present embodiment as seen from above at a certain point in time, Fig. 3 is a schematic view as seen from the side at the same point in time as Fig. 2, and Fig. 4 is a schematic view as seen from the front. In addition, Fig. 5 is a front view showing a state before closing a movable plate of the device for processing an electric wire terminal of the present embodiment, Fig. 6 is a front view showing a state after closing the movable plate, Fig. 7 is a side view showing the state after closing the movable plate, and Fig. 8 is a side view showing the state when the movable plate is slid.

The device for processing an electric wire terminal of the present embodiment includes a semi-split glasses-shaped movable plate 20, a detection unit 30, and a rotation mechanism 40, as shown in Figs. 2 to 4.

The semi-split glasses-shaped movable plate 20, as shown in Figs. 4 to 6, is provided with a pair of opening and closing plates 21, 21 having two semicircular recesses 22 corresponding to the outer peripheral contours of each half circumference of the pair of exposed wire cores 3, 3 arranged adjacent to each other in a direction orthogonal to the axial direction of the electric wire W, at the opposite edges. A protrusion 23 is provided at the boundary between the two adjacent semicircular recesses 22, 22, which is inserted into the recess between the adjacent pair of wire cores 3, 3.

The pair of opening and closing plates 21, 21 are freely openable and closable in the opening direction where the plates 21, 21 are separated from each other and the closing direction where the plates 21, 21 are close to each other (freely openable and closable in the direction of arrow F in Figs. 3 to 6). The opening and closing directions are orthogonal to the axial direction of the electric wire. This device for processing a terminal is equipped with an opening and closing mechanism (not shown) that drives the pair of opening and closing plates 21, 21 of the movable plate 20 to open and close. The movable plate 20 is configured such that, as shown in Fig. 6, when the pair of opening and closing plates 21, 21 are closed, the two semicircular recesses 22, 22 are brought into close contact with the outer periphery of the pair of exposed wire cores 3, 3 arranged adjacent to each other. The movable plate 20 is made of metal or resin (for example, urethane).

The movable plate 20 is rotatably supported around the axis of the electric wire W, as indicated by the arrow R in Figs. 2 to 4, and the rotation mechanism 40 functions to rotationally drive the movable plate 20 around the axis of the electric wire W and to position the movable plate 20 in the rotational direction. In addition, this device for processing a terminal is equipped with a sliding mechanism that pushes the remaining part 2a of the metal foil 2 to the base end side of the electric wire W by sliding the movable plate 20 relatively in the base end direction of the electric wire W, as indicated by arrows S and S1 in Figs. 7 and 8, in a state where the pair of opening and closing plates 21, 21 are closed.

The detection unit 30 acquires a lateral projection images of the pair of exposed wire cores 3, 3 while rotating around the pair of exposed wire cores 3, 3, and detects the alignment direction of the pair of wire cores based on the dimensions of the acquired lateral projection images. Specifically, when a laser sensor unit is used as the detection unit 30, laser light is projected toward the pair of exposed wire cores 3, 3, and based on the received light data, a projection image (lateral projection image) of the pair of exposed wire cores 3, 3 viewed from the side is obtained. Then, a rotational position where the dimensions of the captured projection image, that is, the dimensions in the direction orthogonal to the axial direction of the electric wire (the apparent width of the two wire cores 3, 3) are minimized is detected as the alignment direction of the pair of exposed wire cores 3, 3. Instead of the laser sensor unit, a camera that captures the pair of exposed wire cores 3, 3 from the side may be used.

The rotation mechanism 40 functions to adjust the rotational position of the movable plate 20 such that the opening and closing directions of the pair of opening and closing plates 21, 21 of the movable plate 20 are perpendicular to the alignment direction of the pair of exposed wire cores 3, 3 detected by the detection unit 30. Then, the opening and closing mechanism (not shown) operates the pair of opening and closing plates 21, 21 of the movable plate 20 to close from the open position to the closed position, in a state where the position of the movable plate 20 in the rotational direction is adjusted such that the opening and closing directions of the movable plate 20 are perpendicular to the alignment direction of the pair of wire cores 3, 3.

In the present embodiment, the detection unit 30 and the movable plate 20 are provided so as to be fixed to each other at positions shifted by 90° in the rotational direction and rotate integrally. Therefore, since the detection unit 30 stops rotating at the position where the alignment direction of the pair of wire cores 3, 3 is detected, the rotational position is automatically set such that the opening and closing direction of the pair of opening and closing plates 21, 21 of the movable plate 20 are perpendicular to the alignment direction of the wire cores 3, 3. It is desirable that the detection unit 30 and the movable plate 20 be arranged at the same position or as close as possible in the axial direction.

In the present embodiment, the detection unit 30 and the rotation mechanism 40 serve as a position adjustment means for adjusting the movable plate 20 to the proper rotational position. The device for processing a terminal is equipped with a control unit (not shown) for driving and controlling the detection unit 30, the opening and closing mechanism, the rotation mechanism 40, and the sliding mechanism in coordination.

Next, the operation will be described.

As preparation for the processing work, a terminal processing portion of the electric wire W (the part indicated by Pw in Fig. 1) in which the sheath 1 at the end portion is removed and the metal foil 2 is cut off is set in this device for processing a terminal. At this time, the electric wire W is held and fixed so as not to rotate. In this state, by rotating the detection unit 30 by the required amount, the alignment direction of the pair of wire cores 3, 3 is automatically detected.

When a laser sensor unit is employed as the detection unit 30, the detection of the alignment direction of the pair of wire cores 3, 3 is performed as described above. That is, a laser light is projected toward the pair of exposed wire cores 3, 3, and based on the received light data, a projection image (lateral projection image) viewed from the side of the pair of exposed wire cores 3, 3 is captured. Then, the rotational position where the width dimension in the direction orthogonal to the axial direction of the electric wire in the captured projection image (the apparent width of the two wire cores 3, 3) is minimized is detected as the alignment direction of the pair of exposed wire cores 3, 3.

When the rotation of the detection unit 30 is stopped at the position where the alignment direction of the pair of wire cores 3, 3 is automatically detected, as shown in Fig. 5, the opening and closing direction of the pair of opening and closing plates 21, 21 of the movable plate 20 is automatically set to a rotational position that is perpendicular to the alignment direction of the wire cores 3, 3. Therefore, the opening and closing mechanism operates to close the pair of opening and closing plates 21, 21 of the movable plate 20 from the open position to the closed position (operation of arrow F in Figs. 5 and 6). Fig. 5 shows a state where the pair of opening and closing plates 21, 21 are in the open position, and Fig. 6 shows a state where the pair of opening and closing plates 21, 21 are in the closed position. Then, as shown in Fig. 6, the semicircular recesses 22 of the pair of opening and closing plates 21, 21 come into close contact with the outer peripheries of the pair of wire cores 3, 3. In other words, the wire cores 3, 3 can be smoothly fitted into the semicircular recesses 22, 22. Therefore, no undue force is applied to the wire cores 3, 3, and no scratches or indentations are made on the wire cores 3, 3.

Fig. 7 is a side view of the device for processing an electric wire terminal in this state. In this state, as shown in Fig. 8, the movable plate 20 is slid to the base end side of the electric wire W by the sliding mechanism. Then, the remaining part 2a of the metal foil is pushed to the base end side of the electric wire W by the movable plate 20.

In this way, even when the remaining part 2a of the metal foil occurs on the base end side of the exposed wire cores 3, 3, the remaining part 2a can be pushed to the base end side of the electric wire W by the sliding operation after closing the movable plate 20. Therefore, it is possible to eliminate the adverse effects caused by the remaining part 2a of the metal foil, improve the terminal processing quality, and as a result, contribute to the automation of terminal processing.

In this embodiment in particular, when the movable plate 20 is closed, the semicircular recesses 22, 22 of the pair of opening and closing plates 21, 21 can be brought into close contact with the outer periphery of the exposed pair of wire cores 3, 3, so that with a single sliding operation of the movable plate 20, the remaining part 2a of the metal foil can be neatly pushed to the base end side of the electric wire W.

In addition, according to this embodiment, since the detection unit 30 automatically detects the alignment direction of the pair of wire cores 3, 3 and the position of the movable plate 20 is properly adjusted, the remaining part 2a of the metal foil can be easily and efficiently pushed to the base end side of the electric wire W regardless of the orientation of the electric wire W when the electric wire W is inserted into the device.

Further, in this embodiment, since the detection unit 30 and the movable plate 20 are configured to rotate integrally, the structure can be simplified.

In this embodiment, since the protrusion 23 is left at the boundary of the two semicircular recesses 22, 22 formed in the opening and closing plate 21, the metal foil remaining in the recessed portion between the two wire cores 3, 3 can also be pushed to the base end side of the electric wire by the protrusion 23. At this time, without applying unnecessary force to the opening and closing plates 21, 21, the protrusion 23 can reach the metal foil remaining in the recessed portion between the two wire cores 3, 3, so there is no need to make the contact of the opening and closing plates 21, 21 with the wire cores 3, 3 stronger, and there is no scratches or indentations on the wire cores 3, 3.

In the case where the electric wire to be processed is of the twisted core type, the movable plate 20 is closed at a position slightly away from the sleeve 10, and the movable plate 20 may be slid in the axial direction while being rotated in the direction to untwist the wire cores 3, 3.

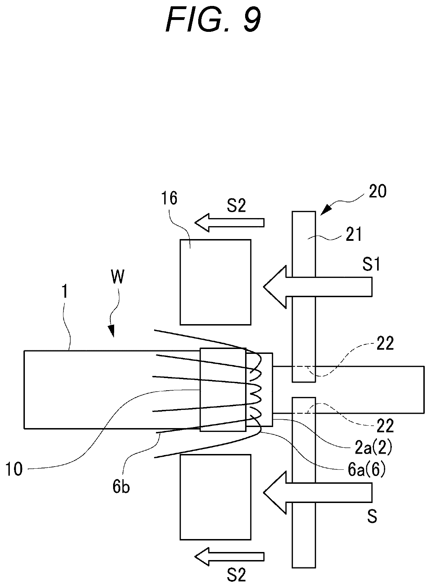

Further, as shown in Fig. 9, when the braid 6, which has been pre-folded, is in the terminal processing portion, the bent part 6a of the braid is pushed to the sleeve 10 side by the sliding operation of the movable plate 20 or a similarly shaped movable plate. In this way, the bent part 6a can be further bent smaller near the sleeve 10, thereby making it possible to form the braid 6 to the specified dimensions. Therefore, all unnecessary items such as the metal foil 2 and the braid 6 at the base of the sleeve 10 can be contained in a compact form, thereby improving the quality of the terminal processing portion. The braid 6 may be folded in advance through the sliding operation (operation of arrow S2) of a forming block or a forming sleeve 16 so as to overlap a folded part 6b on the outer periphery of the sleeve 10.

In this way, by the pressing operation of the metal foil by the movable plate 20, the bent part 6a of the braid 6 can be strongly pushed into the base end side of the electric wire W, thereby improving the folding dimension quality of the braid 6.

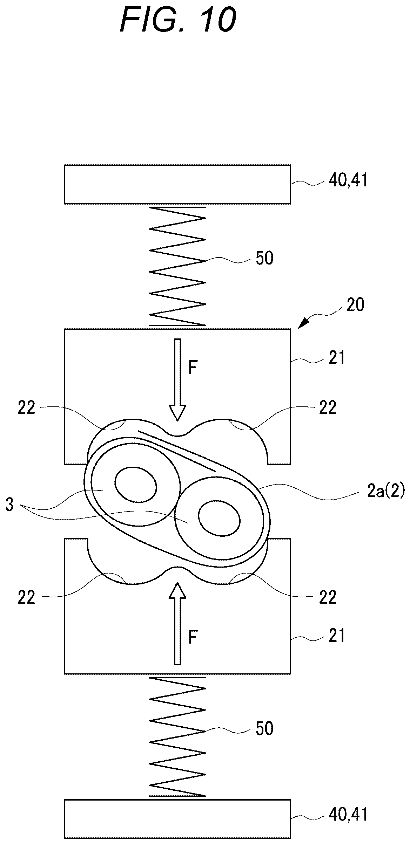

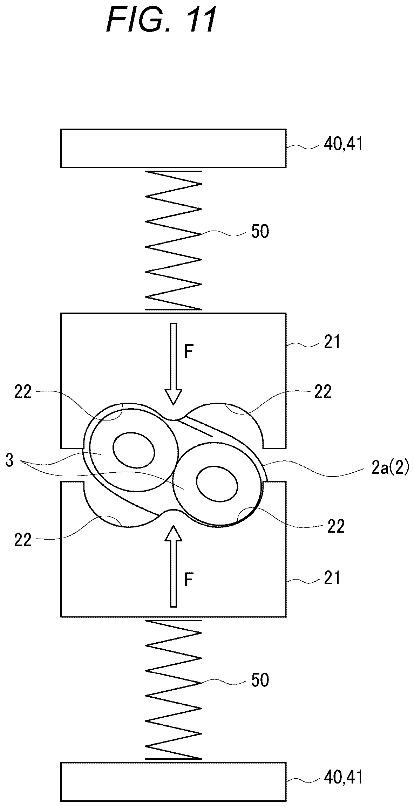

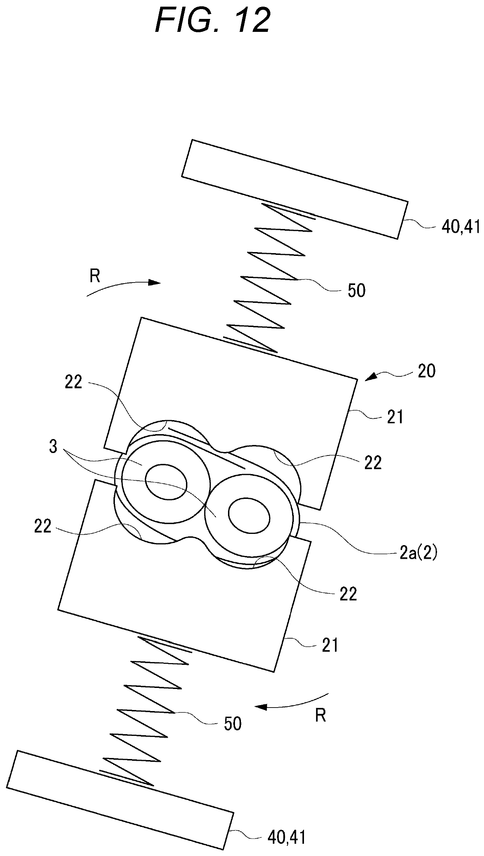

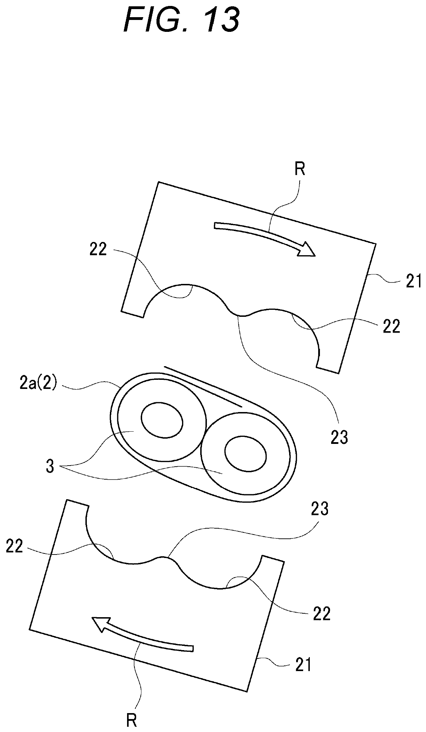

Fig. 10 is a front view of a device for processing an electric wire terminal according to another embodiment of the present invention, Fig. 11 is a front view showing a state in the middle of closing the movable plate of the device for processing an electric wire terminal shown in Fig. 10, Fig. 12 is a front view showing a state where the movable plate of the device for processing an electric wire terminal shown in Fig. 10 is rotated by a predetermined angle, and Fig. 13 is a front view illustrating the shape characteristic points of the movable plate of the device for processing an electric wire terminal shown in Fig. 10.

As shown in Figs. 10 to 12, the device for processing a terminal of the present embodiment includes the movable plate 20, but does not include the detection unit. Then, the rotation mechanism 40 includes a rotation frame 41 that supports the movable plate 20 via an opening and closing mechanism (not shown), and a spring 50 is interposed between the rotation frame 41 and the movable plate 20 to allow for the escape of the movable plate 20 in the rotational direction.

In this device, due to the action of the spring 50, the movable plate 20 can be flexibly pressed against the wire cores 3, 3, so the remaining part 2a of the metal foil 2 can be pushed to the base end side of the electric wire without causing scratches or indentations on the wire cores 3, 3. That is, when the pair of opening and closing plates 21, 21 of the movable plate 20 are operated from the open position shown in Fig. 10 to the closed position shown in Fig. 11, the movable plate 20 comes into contact with the wire cores 3, 3 with some play. Therefore, by sliding the movable plate 20 in a somewhat closed state and repeating the operation several times while changing the rotational position of the movable plate 20 as shown in Fig. 12, the remaining part 2a of the metal foil 20 can be pushed to the base end side of the electric wire W. In this case, the pair of opening and closing plates 21, 21 of the movable plate 20 are designed to escape in the opposite direction by the spring 50 when the plates 21, 21 hit the wire cores 3, 3, so the plates 21, 21 do not damage the wire cores 3, 3. In this embodiment, as shown in Fig. 13, the protrusion 23 at the boundary of the two semicircular recesses 22 of the pair of opening and closing plates 21, 21 of the movable plate 20 does not need to fit into the recess between the two wire cores 3, 3, so it is chamfered into a smooth arc shape rather than an acute angle.

In the above-described embodiment, the case is shown where the electric wire is fixed so as not to rotate and the movable plate 20 is rotated, but it is also possible to rotate the electric wire W instead of rotating the movable plate 20. In addition, a control unit (not shown) may be configured to allow input of the rotation angle per rotation by the rotation mechanism 40, so that an operator can set the rotation angle per rotation in accordance with the type of electric wire.

Here, the features of the device for processing an electric wire terminal and the method for processing an electric wire terminal according to the embodiment of the present invention described above are briefly summarized and listed below [1] to [6].
[1] A device for processing an electric wire terminal in which, in an electric wire (W) having a pair of wire cores (3, 3) of which a periphery is covered with a metal foil (2) and a sheath (1), in a state where the sheath (1) and the metal foil (2) at an end portion of the electric wire (W) are removed and the wire cores (3, 3) are exposed, the device processes a remaining part (2a) of the metal foil at a base end of the exposed wire cores (3, 3), the device including:
   a movable plate (20) that includes a pair of opening and closing plates (21, 21) and is rotatable around an axis of the electric wire, the opening and closing plates (21, 21) having two semicircular recesses (22, 22) each corresponding to an outer peripheral contour of each half circumference of the exposed pair of wire cores (3, 3) on opposite edges and being freely openable and closable in an opening direction in which the opening and closing plates (21, 21) are separated from each other and a closing direction in which the opening and closing plates (21, 21) are close to each other;
   an opening and closing mechanism that drives the pair of opening and closing plates (21, 21) to open and close;
   a rotation mechanism (40) that rotates the movable plate (20) around the axis of the electric wire (W) and positions the movable plate (20) in a rotational direction; and
   a sliding mechanism that pushes the remaining part (2a) of the metal foil to the base end side of the electric wire (W), by sliding the movable plate (20) relatively in a base end direction of the electric wire (W), in a state where the pair of opening and closing plates (21, 21) are closed.
   According to the configuration of the above [1], even when the remaining part (2a) of the metal foil occurs on the base end side of the exposed wire cores (3, 3), the remaining part (2a) can be pushed to the base end side of the electric wire (W) by the sliding operation after closing the movable plate (20). Therefore, it is possible to eliminate the adverse effects caused by the remaining part (2a) of the metal foil and improve the terminal processing quality. In addition, it can contribute to the automation of terminal processing.
[2] The device for processing an electric wire terminal according to the above [1], in which
   the movable plate (20) is configured to bring the two semicircular recesses (22, 22) into close contact with the outer periphery of the pair of exposed wire cores (3, 3) arranged adjacent to each other, when the pair of opening and closing plates (21, 21) are closed,
   the movable plate (20) is supported via a position adjustment means for adjusting a relative position of the electric wire (W) and the movable plate (20) in a circumferential direction such that the opening and closing directions of the pair of opening and closing plates (21, 21) are perpendicular to an alignment direction of the pair of exposed wire cores (3, 3), and
   the opening and closing mechanism operates the pair of opening and closing plates (21, 21) of the movable plate (20) to close from an open position to a closed position, in a state where the relative position of the electric wire (W) and the movable plate (20) in the circumferential direction is adjusted such that the opening and closing directions of the movable plate (20) are perpendicular to the alignment direction of the pair of wire cores (3, 3).
   According to the configuration of the above [2], when the movable plate (20) is closed, the semicircular recesses (22, 22) of the opening and closing plates (21, 21) can be brought into close contact with the outer periphery of the exposed pair of wire cores (3, 3), so that with a single slide operation of the movable plate (20), the remaining part (2a) of the metal foil can be neatly pushed to the base end side of the electric wire (W).
[3] The device for processing an electric wire terminal according to the above [2], in which
   the position adjustment means includes a detection unit (30) that acquires a lateral projection image of the pair of exposed wire cores while rotating around the pair of exposed wire cores, and detects the alignment direction of the pair of wire cores based on a dimension of the acquired lateral projection image, and
   the rotation mechanism (40) adjusts a rotational position of the movable plate (20) such that the opening and closing directions of the pair of opening and closing plates (21, 21) of the movable plate (20) are perpendicular to the alignment direction of the pair of exposed wire cores (3, 3) detected by the detection unit (30).
   According to the configuration of the above [3], since the detection unit (30) automatically detects the alignment direction of the pair of wire cores (3, 3), the remaining part (2a) of the metal foil can be easily and efficiently pushed to the base end side of the electric wire (W) regardless of the orientation of the electric wire (W) when the electric wire (W) is inserted into the device.
[4] The device for processing an electric wire terminal according to the above [3], in which
   the detection unit (30) and the movable plate (20) are provided so as to be fixed to each other at positions shifted by 90° in the rotational direction and rotate integrally,
   the detection unit (30) detects a rotational position where a dimension of the lateral projection image of the pair of exposed wire cores (3, 3) in the direction orthogonal to an axial direction of the electric wire (W) is minimized, as the alignment direction of the pair of exposed wire cores (3, 3), and
   the rotation mechanism (40) adjusts a rotational position of the movable plate (20) such that the opening and closing directions of the pair of opening and closing plates (21, 21) of the movable plate (20) are perpendicular to the alignment direction of the pair of exposed wire cores (3, 3) detected by the detection unit (30).
   According to the configuration of the above [4], since the detection unit (30) and the movable plate (20) are configured to rotate integrally, the structure can be simplified.
[5] The device for processing an electric wire terminal according to any of the above [1] to [4], in which the electric wire (W) is configured to include a braid (6) between the metal foil (2) and the sheath (1), and
   the movable plate (20) is slid in the base end direction of the electric wire (W) to cause the remaining part (2a) of the metal foil and a bent part (6a) of the braid (6) to be pushed together to the base end side of the electric wire (W).
   According to the configuration of the above [5], the pushing operation of the remaining part (2a) of the metal foil by the movable plate (20) causes the bent part (6a) of the braid to be strongly pushed to the base end side of the electric wire (W), thereby improving the quality of the braid's folding dimensions.
[6] A method for processing electric wire terminal, including:
   a step of, from an electric wire (W) having a pair of wire cores (3, 3) of which a periphery is covered with a metal foil (2) and a sheath (1), removing the sheath (1) and the metal foil (2) at an end portion of the electric wire;
   a step of closing a pair of opening and closing plates (21, 21) having two semicircular recesses (22, 22) each corresponding to an outer peripheral contour of each half circumference of the exposed pair of wire cores (3, 3) on opposite edges and being freely openable and closable in an opening direction in which the opening and closing plates (21, 21) are separated from each other and a closing direction in which the opening and closing plates (21, 21) are close to each other, at a position of the exposed pair of wire cores (3, 3), in a state positioned in a rotational direction; and
   a step of pushing the remaining part (2a) of the metal foil to the base end side of the electric wire (W), by sliding the pair of opening and closing plates relatively in a base end direction of the electric wire (W), in a state where the pair of opening and closing plates (21, 21) are closed.

According to the configuration of the above [6], even when the remaining part (2a) of the metal foil occurs on the base end side of the exposed wire cores (3, 3), the remaining part (2a) can be pushed to the base end side of the electric wire (W). Therefore, it is possible to eliminate the adverse effects caused by the remaining part (2a) of the metal foil and improve the terminal processing quality.

The present invention is not limited to the embodiments described above, and various modifications, improvements, and the like can be made as appropriate. In addition, the material, shape, dimensions, number, placement locations, etc. of each component in the above-described embodiments are arbitrary as long as the present invention can be achieved and are not limited.

As described above, various embodiments have been described with reference to the drawings, but it goes without saying that the present invention is not limited to such examples. It is evident that those skilled in the art can come up with various modifications or alterations within the scope described in the claims, and it is understood that these also naturally fall within the technical scope of the present invention. In addition, within the scope not deviating from the gist of the invention, the respective components in the above embodiment may be combined arbitrarily.

This application is based on Japanese Patent Application No. 2022-119625, filed on July 27, 2022, the contents of which are incorporated herein by reference.

### REFERENCE SIGNS LIST

1 Sheath
2. Metal foil
2a Remaining part of metal foil
3 Wire core
6 Braid
20 Movable plate
21 Opening and closing plate
22 Semicircular recess
30 Detection unit
40 Rotation mechanism
41 Rotation frame
50 Spring
W Electric wire
Pw Terminal processing portion

## Claims

1. A device for processing an electric wire terminal in which, in an electric wire having a pair of wire cores of which a periphery is covered with a metal foil and a sheath, in a state where the sheath and the metal foil at an end portion of the electric wire are removed and the wire cores are exposed, the device processes a remaining part of the metal foil at a base end of the exposed wire cores, the device comprising:
a movable plate that includes a pair of opening and closing plates and is rotatable around an axis of the electric wire, the opening and closing plates having two semicircular recesses each corresponding to an outer peripheral contour of each half circumference of the exposed pair of wire cores on opposite edges and being freely openable and closable in an opening direction in which the opening and closing plates are separated from each other and a closing direction in which the opening and closing plates are close to each other;
an opening and closing mechanism that drives the pair of opening and closing plates to open and close;
a rotation mechanism that rotates the movable plate around the axis of the electric wire and positions the movable plate in a rotational direction; and
a sliding mechanism that pushes the remaining part of the metal foil to the base end side of the electric wire, by sliding the movable plate relatively in a base end direction of the electric wire, in a state where the pair of opening and closing plates are closed.

2. The device for processing an electric wire terminal according to claim 1, wherein
the movable plate is configured to bring the two semicircular recesses into close contact with the outer periphery of the pair of exposed wire cores arranged adjacent to each other, when the pair of opening and closing plates are closed,
the movable plate is supported via a position adjustment means for adjusting a relative position of the electric wire and the movable plate in a circumferential direction such that opening and closing directions of the pair of opening and closing plates are perpendicular to an alignment direction of the pair of exposed wire cores, and
the opening and closing mechanism operates the pair of opening and closing plates of the movable plate to close from an open position to a closed position, in a state where the relative position of the electric wire and the movable plate in the circumferential direction is adjusted such that the opening and closing directions of the movable plate are perpendicular to the alignment direction of the pair of exposed wire cores.

3. The device for processing an electric wire terminal according to claim 2, wherein
the position adjustment means
includes a detection unit that acquires a lateral projection image of the pair of exposed wire cores while rotating around the pair of exposed wire cores, and detects the alignment direction of the pair of wire cores based on a dimension of the acquired lateral projection image, and
the rotation mechanism adjusts a rotational position of the movable plate such that the opening and closing directions of the pair of opening and closing plates of the movable plate are perpendicular to the alignment direction of the pair of exposed wire cores detected by the detection unit.

4. The device for processing an electric wire terminal according to claim 3, wherein
the detection unit and the movable plate are provided so as to be fixed to each other at positions shifted by 90° in the rotational direction and rotate integrally,
the detection unit detects a rotational position where a dimension of the lateral projection image of the pair of exposed wire cores in the direction orthogonal to an axial direction of the electric wire is minimized, as the alignment direction of the pair of exposed wire cores, and
the rotation mechanism adjusts the rotational position of the movable plate such that the opening and closing directions of the pair of opening and closing plates of the movable plate are perpendicular to the alignment direction of the pair of exposed wire cores detected by the detection unit.

5. The device for processing an electric wire terminal according to claim 1, wherein
the electric wire is configured to include a braid between the metal foil and the sheath, and
the movable plate is slid in the base end direction of the electric wire to cause the remaining part of the metal foil and a bent part of the braid to be pushed together to the base end side of the electric wire.

6. A method for processing electric wire terminal, comprising:
a step of, from an electric wire having a pair of wire cores of which a periphery is covered with a metal foil and a sheath, removing the sheath and the metal foil at an end portion of the electric wire;
a step of closing a pair of opening and closing plates having two semicircular recesses each corresponding to an outer peripheral contour of each half circumference of the exposed pair of wire cores on opposite edges and being freely openable and closable in an opening direction in which the opening and closing plates are separated from each other and a closing direction in which the opening and closing plates are close to each other, at a position of the exposed pair of wire cores, in a state positioned in a rotational direction; and
a step of pushing the remaining part of the metal foil to the base end side of the electric wire, by sliding the pair of opening and closing plates relatively in a base end direction of the electric wire, in a state where the pair of opening and closing plates are closed.
